# EUROPÄISCHE PATENTANMELDUNG

(11) **EP 2 657 195 A1**
(43) Veröffentlichungstag der Anmeldung: **30.10.2013**
(21) Anmeldenummer: 13002033.2
(22) Anmeldetag: 18.04.2013
(51) Int. Cl.: C02F 3/34, C02F 1/72, C02F 1/40

(54) **Einsatz von Katalase in Abfüllanlagen**

(30) Priorität: 23.04.2012 DE 102012206635
(71) Anmelder: Naatz, Kim, 85354 Freising (DE)
(72) Erfinder: Naatz, Kim, 85354 Freising (DE)

(57) **Zusammenfassung**

Die Erfindung betrifft ein Verfahren zur Rückgewinnung / Aufbereitung von im Rahmen einer Desinfektion in einer Abfüllvorrichtung verwendetem mit Wasserstoffperoxid belastetem Wasser mit dem Schritt des Zuführens von Katalase zu dem mit Wasserstoffperoxid belastetem Wasser Von den Füllern (A) gelangt mit H2O2 versetztes Wasser, das an den Füllern (A) zur Desinfektion von abzufüllenden Behältern dient, in einen Sammelbehälter (3) mit Füllstandssonde (4). Bei Erreichen eines vorbestimmten Füllstands veranlasst eine Steuerung das Abpumpen es Wassers in den Reaktor (7). Aus einem Vorratsbehälter (9) wird Katalase dem Reaktor (7) zugeführt zum Abbau des Wasserstoffperoxids. Das von Wasserstoffperoxid befreite Wasser verlässt den Reaktor über einen Überlaufauslauf (8) und kann wiederverwendet werden.

## Beschreibung

### Gebiet der Erfindung

Die vorliegende Erfindung betrifft Abfüllmaschinen und insbesondere Abfüllmaschinen, bei denen Wasserstoffperoxid zur Desinfektion eingesetzt wird.

### Stand der Technik

Beim Betrieb von Abfüllmaschinen zur Abfüllung flüssiger Lebensmittel, wie beispielsweise Fruchtsäfte oder Bier, ist eine Desinfektion der zu füllenden Behälter, beispielsweise Flaschen, Getränkekartons, etc., vonnöten. Die Desinfektion fertig geblasener zu befüllender oder befüllter Behälter oder auch von Vorformlingen oder auch Weichverpackungen und Getränkekartons in Abfüllanlagen kann insbesondere mithilfe von Wasserstoffperoxid (H₂O₂) erfolgen, das zum Besprühen der Behälter zur Reinigung/Desinfektion derselben vorgesehen ist. Hierbei kommt es zur Kondensation des H₂O₂, das dann mithilfe von Wasser abtransportiert wird, sodass nach der Reinigung ein stetiger Abfluss von mit Wasserstoffperoxid belastetem Wasser auftritt.

Wasserstoffperoxid ist jedoch ökologisch bedenklich und mit Wasserstoffperoxid belastetes Wasser muss in einer Kläranlage, ggf. genehmigungspflichtig, speziell aufbereitet werden, da die Bakterien an das H₂O₂ adaptiert werden müssen, da sie ansonsten zerstört werden können und dadurch die ganze Kläranlage stillgelegt werden könnte. Das mit Wasserstoffperoxid belastete Wasser kann in Abfüllanlagen nicht mehr anderweitig verwendet werden, so dass also ständig neues Frischwasser zum Abtransport des H₂O₂ benötigt wird. wodurch der Verbrauch an Frischwasser erhöht wird.

Es liegt somit der vorliegenden Erfindung die Aufgabe zugrunde, in einer Abfüllanlage austretendes, mit Wasserstoffperoxid belastetes Wasser, nachdem eine Desinfektion mit H₂O₂ stattgefunden hat, zur Wiederverwendung von Wasserstoffperoxid zu befreien.

### Beschreibung der Erfindung

Die oben genannte Aufgabe wird durch das Verfahren gemäß Anspruch 1 gelöst. Das beanspruchte Verfahren zur Rückgewinnung/Aufbereitung von im Rahmen einer Desinfektion in einer Abfüllvorrichtung verwendetem mit Wasserstoffperoxid belastetem Wasser umfasst den Schritt des Zuführens von Katalase zu dem mit Wasserstoffperoxid belastetem Wasser. Die Abfüllvorrichtung wird zur Abfüllung flüssiger Lebensmittel in Behälter, wie Flaschen und Getränkekartons, verwendet. Im Verlauf des Füllprozesses durch einen oder mehrere Füller ist eine Desinfektion der Behälter bzw. Verpackungsmaterialien erforderlich, die mithilfe des Wasserstoffperoxids erfolgt, das mit Hilfe von Wasser aus der Füllanlage ausgetragen wird. Dieses belastete Wasser wird erfindungsgemäß zum Abbau des Wasserstoffperoxids mit Katalase behandelt, um das so von Wasserstoffperoxid befreite Wasser wieder verwenden zu können. Insbesondere kann das mit Wasserstoffperoxid belastete Wasser nach Gebrauch zur Desinfektion in der Abfüllvorrichtung abzufüllender und/oder abgefüllter Behälter zur nachfolgenden Behandlung mit der Katalase gesammelt werden.

Gemäß einer Weiterbildung umfasst das erfindungsgemäße Verfahren die Schritte:
Sammeln des mit Wasserstoffperoxid belasteten Wassers in einem Sammelbehälter;
Zuführen des mit Wasserstoffperoxid belasteten Wassers von dem Sammelbehälter zu einem Reaktor;
Zuführen der Katalase zu dem mit Wasserstoffperoxid belasteten Wasser in dem Reaktor; und
(Wieder-)Verwenden des in dem Reaktor von dem Wasserstoffperoxid befreiten Wassers in der Abfüllvorrichtung bzw. an anderer Stelle, wo man das Wasser im Betrieb einsetzen bzw. weiterverwenden kann. Das von dem Wasserstoffperoxid befreite Wasser wird also aus dem Reaktor rückgeführt oder an andere Stellen geführt um eine Wiederverwendung anzustreben. Das von dem Wasserstoffperoxid befreite Wasser muss also nicht in eine Kläranlage geliefert werden, sondern kann in einem beliebigen weiteren Betriebsschritt Verwendung finden. Es kann beispielsweise zur Vorwäsche von (Konzentrat-)Tanks oder in Kühlkreisläufen, in einem Tunnelpasteur usw. verwendet werden.

Eine effiziente Aufbereitung des belasteten Wassers zur Wiederverwendung wird so ermöglicht. Insbesondere kann der Reaktor einen Überlaufauslauf aufweisen, der ohne Pumpwirkung zu einer Lieferung des von dem Wasserstoffperoxid befreiten Wassers aus dem Reaktor heraus dient.

Die oben genannte Aufgabe wird ebenfalls gelöst durch eine hierin bereitgestellte
Abfüllvorrichtung, insbesondere zum Abfüllen von flüssigen Lebensmitteln in Behälter und Getränkekartons, mit
einem Füller zum Abfüllen von Behältern;
einer Einrichtung zum Desinfizieren der Behälter mit Wasserstoffperoxid oder Wasserstoffperoxid versetztem Wasser
einer Einrichtung zum Sammeln des mit Wasserstoffperoxid versetzten Wassers nach dem Desinfizieren der Behälter; und
einem Reaktor zum Abbau des Wasserstoffperoxids in dem mit Wasserstoffperoxid versetzten Wasser;
einer Einrichtung zum Zuführen des in der Einrichtung zum Sammeln des mit Wasserstoffperoxid versetzten Wassers zu dem Reaktor; und
einer Einrichtung zum Zuführen von Katalase zu dem Reaktor und somit zu dem in dem Reaktor befindlichen, mit Wasserstoffperoxid versetzten Wasser. Die Katalase kann über eine Schlauch- oder Rohrleitung von einem Vorratsbehälter dem Reaktor zugeführt werden.

Die Einrichtung zum Zuführen des in der Einrichtung zum Sammeln des mit Wasserstoffperoxid versetzten Wassers zu dem Reaktor sowie die Einrichtung zum Zuführen von Katalase zu dem Reaktor kann jeweils eine Pumpe umfassen. Der Reaktor kann einen tangentialen Einlauf zum Zuführen des mit Wasserstoffperoxid versetzten Wassers zu dem Reaktor aufweisen. Gemäß einem Beispiel weist der Reaktor einen Überlaufauslauf auf, der dazu führt, dass, wenn der Reaktor vollständig gefüllt ist, das von dem Wasserstoffperoxid befreite Wasser, ohne dass eine Pumpwirkung einer elektrisch betriebenen Pumpe erforderlich wäre, den Reaktor zur Wiederverwendung in der Abfüllanlage oder ihren Peripherie-Komponenten verlassen kann.

In den oben genannten Beispielen kann die Einrichtung zum Sammeln des mit Wasserstoffperoxid versetzten Wassers eine Füllstandsonde aufweisen, die dazu ausgebildet ist, den Füllstand in der Einrichtung zu messen. Weiterhin kann die Einrichtung zum Sammeln des mit Wasserstoffperoxid versetzten Wassers ein Ölabscheider sein, so dass auch Ölverunreinigungen dem schließlich nach der Katalasebehandlung zur Wiederverwendung bereitstehenden Wasser entzogen werden können.

Die Abfüllvorrichtung kann weiterhin eine Steuereinrichtung umfassen, die dazu ausgebildet ist, die Einrichtung zum Zuführen des mit Wasserstoffperoxid versetzten Wassers zu dem Reaktor dazu zu veranlassen das mit Wasserstoffperoxid versetzte Wasser dem Reaktor zuzuführen, wenn sie von der Füllstandsonde ein Signal erhält, das anzeigt, dass das mit Wasserstoffperoxid versetzte Wasser in der Einrichtung zum Sammeln des mit Wasserstoffperoxid versetzten Wassers einen vorbestimmten Füllstand erreicht hat.

In sämtlichen oben beschriebenen Beispielen für das erfindungsgemäße Verfahren und die erfindungsgemäße Vorrichtung kann Katalase von Säugetieren oder auch Pilzen zum Abbau des Wasserstoffperoxids verwendet werden. Insbesondere können hierbei Rinderleberkatalase oder auch Katalase-A oder Katalase-R des *Aspergillus niger* verwendet werden.

Im Folgenden werden Ausführungsformen eines erfindungsgemäßen Verfahrens unter Bezugnahme auf die Zeichnung beschrieben. Die beschriebenen Ausführungsformen sind in jeder Hinsicht lediglich als illustrativ und nicht als einschränkend anzusehen und verschiedene Kombinationen der angeführten Merkmale sind in der Erfindung eingeschlossen.

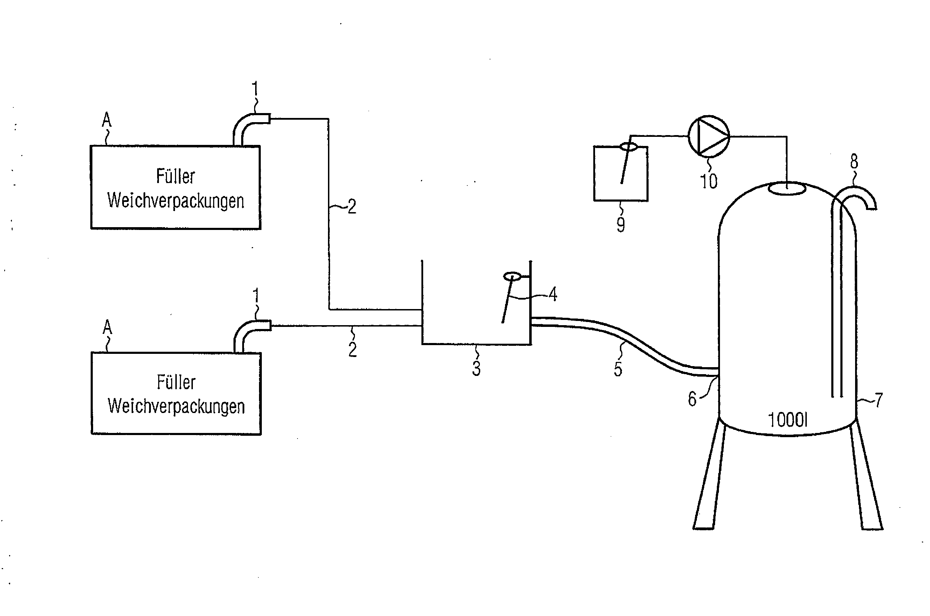

Figur 1 veranschaulicht einen Aufbau zur Behandlung von in einer Abfüllanlage mit Wasserstoffperoxid belastetem Wasser mithilfe von Katalase.

Wie es in Figur 1 gezeigt ist, gelangt von Füllern A, an denen mit Wasserstoffperoxid versetztes Wasser zur Desinfektion von durch die Füller A abzufüllende Behälter Verwendung findet, eben dieses Wasser durch jeweils einen Auslauf 1 durch jeweils eine Schlauch- oder Rohrverbindung 2 in einen Sammelbehälter 3 für das mit dem Wasserstoffperoxid belastete Wasser. In dem gezeigten Beispiel befindet sich in dem Sammelbehälter 3 eine Füllstandsonde 4. Erreicht der Füllstand des gesammelten mit Wasserstoffperoxid belasteten Wassers in dem Sammelbehälter 3 einen vorbestimmten Grenzwert, veranlasst eine Steuerung (nicht gezeigt) auf ein entsprechendes Signal von der Füllstandsonde 4 hin das Abpumpen des Sammelbehälter 3 über eine weitere Schlauch- oder Rohrverbindung mithilfe einer Pumpe 5.

Das von der Pumpe 5 aus dem Sammelbehälter 3 abgepumpte mit Wasserstoffperoxid belastete Wasser wird über die weitere Schlauch- oder Rohrverbindung und über einen tangentialen Einlauf 6 einem Reaktor 7 zugeführt. Der Reaktor 7 kann ein Vielfaches des Volumens des Sammelbehälters 3 fassen. Beispielsweise kann der Reaktor 7 zur Aufnahme von 1000 Liter ausgelegt sein, während der Sammelbehälter 3 zur Aufnahme von lediglich 100 Liter ausgelegt sein kann. Der Reaktor 7 weist einen Auslauf 8 auf, über den das in dem Reaktor von dem Wasserstoffperoxid befreite Wasser zur Wiederverwendung den Reaktor 7 verlassen kann. Bei dem Auslauf 8 kann es sich um einen Überlaufauslauf handeln, der zu einer automatischen Leerung bei Überlauf führt. Der Auslauf 8 kann insbesondere ein Rohr innerhalb des Reaktors 7 umfassen, wobei sich das untere Rohrende nahe dem Boden des Reaktors 7 befindet, woselbst das Wasser im wesentlichen frei von Wasserstoffperoxid ist. Durch Vorsehen des Überlaufauslaufs ist keine Pumpe nötigt und es wird so keine zusätzliche elektrische Energie dazu benötigt, das von Wasserstoffperoxid befreite Wasser zur Wiederverwendung, beispielsweise für Vorreinigungsprozesse für Tanks etc. oder in der Abfüllanlage, aus dem Reaktor 7 zu gewinnen.

In dem Rektor 7 wird dem mit Wasserstoffperoxid belasteten Wasser Katalase zum Abbau des Wasserstoffperoxids zugesetzt. Der Begriff Katalase umfasst unterschiedliche Enzyme, die die Umwandlung von Wasserstoffperoxid (H₂O₂) in molekularen Sauerstoff (O₂) und Wasser (H₂O) katalysieren: 2 H₂O₂ → 2 H₂O + O₂. In der vorliegenden Erfindung kann Rinderleberkatalase oder auch Katalase-A oder Katalase-R des *Aspergillus niger* verwendet werden. Jegliche andere Katalase, beispielsweise von Säugetieren oder Pilzen, kann alternativ Verwendung finden. In dem in Figur 1 gezeigten Beispiel wird die Katalase von einem Vorratsbehälter 9 über eine Verbindung mit dem Reaktor 7 mithilfe einer Dosierpumpe 10 dem Reaktor 7 und dem darin befindlichen mit Wasserstoffperoxid belasteten Wasser zugeführt.

Dadurch dass der Reaktor 7 ein relativ großes Volumen an mit Wasserstoffperoxid belastetem Wasser aufnehmen kann, kann eine relativ lange Kontaktzeit des Wassers mit der Katalase ermöglicht werden. Hierdurch und durch die hohe Wirksamkeit von Katalase für den Abbau von Wasserstoffperoxid werden nur relativ geringe Mengen an Katalase benötigt. Eine Anpassung der Katalasezugabe in Abhängigkeit von der Wasserstoffperoxidbelastung des Wassers, der Größe des Reaktors, etc. ist mithilfe von experimentellen Untersuchungen leicht möglich.

Einer Verringerung des Katalasebedarfs dient auch der tangentiale Einlauf 6, durch den eine natürliche Vermischung von mit Wasserstoffperoxid belastetem Wasser und Katalase verursacht wird. Auch führt der durch Auslauf durch den Überlaufauslauf erzeugte Sog zu einer Vermischung, d.h. zu einem erhöhten Kontakt, des mit Wasserstoffperoxid belasteten Wassers mit der Katalase.

## Patentansprüche

1. Verfahren zur Rückgewinnung von im Rahmen einer Desinfektion in einer Abfüllvorrichtung verwendetem mit Wasserstoffperoxid belastetem Wasser mit dem Schritt des Zuführens von Katalase zu dem mit Wasserstoffperoxid belasteten Wasser.

2. Das Verfahren gemäß Anspruch 1, in dem das mit Wasserstoffperoxid belastete Wasser nach Gebrauch zur Desinfektion in der Abfüllvorrichtung abzufüllender und/oder abgefüllter Behälter, Getränkekartons oder anderer Verpackungsmaterialien zur nachfolgenden Behandlung mit der Katalase gesammelt wird.

3. Das Verfahren gemäß einem der vorhergehenden Ansprüche, mit den Schritten:
Sammeln des mit Wasserstoffperoxid belasteten Wassers in einem Sammelbehälter;
Zuführen des mit Wasserstoffperoxid belasteten Wassers von dem Sammelbehälter zu einem Reaktor;
Zuführen der Katalase zu dem mit Wasserstoffperoxid belasteten Wasser in dem Reaktor; und
Verwenden des in dem Reaktor von dem Wasserstoffperoxid befreiten Wassers in der Abfüllvorrichtung oder in einem weiteren Betriebsschritt.

4. Das Verfahren gemäß Anspruch 3, in dem das von dem Wasserstoffperoxid befreite Wasser durch einen Überlaufauslauf aus dem Reaktor zur Verwendung in der Abfüllvorrichtung oder in einem weiteren Betriebsschritt geführt wird.

5. Das Verfahren gemäß einem der vorhergehenden Ansprüche, in dem Katalase von einem Säugetier oder einem Pilz, insbesondere Rinderleberkatalase oder auch Katalase-A oder Katalase-R des *Aspergillus niger,* zum Abbau des Wasserstoffperoxids verwendet wird.

6. Abfüllvorrichtung, insbesondere zum Abfüllen von flüssigen Lebensmitteln in Behälter, mit
einem Füller zum Abfüllen von Behältern;
einer Einrichtung zum Desinfizieren der Behälter mit Wasserstoffperoxid oder mit Wasserstoffperoxid versetztem Wasser;
einer Einrichtung zum Sammeln des mit Wasserstoffperoxid versetzten Wassers nach dem Desinfizieren der Behälter; und
einem Reaktor zum Abbau des Wasserstoffperoxids in dem mit Wasserstoffperoxid versetzten Wasser;
einer Einrichtung zum Zuführen des in der Einrichtung zum Sammeln des mit Wasserstoffperoxid versetzten Wassers zu dem Reaktor; und
einer Einrichtung zum Zuführen von Katalase zu dem Reaktor.

7. Die Abfüllvorrichtung gemäß Anspruch 6, in der der Reaktor einen tangentialen Einlauf zum Zuführen des mit Wasserstoffperoxid versetzten Wassers zu dem Reaktor aufweist.

8. Die Abfüllvorrichtung gemäß Anspruch 6 oder 7, in dem der Reaktor einen Überlaufauslauf aufweist.

9. Die Abfüllvorrichtung gemäß einem der Ansprüche 6 bis 8, in der die Einrichtung zum Sammeln des mit Wasserstoffperoxid versetzten Wassers eine Füllstandsonde aufweist, die dazu ausgebildet ist, den Füllstand in der Einrichtung zu messen.

10. Die Abfüllvorrichtung gemäß Anspruch 9, weiterhin eine Steuereinrichtung umfassend, die dazu ausgebildet ist, die Einrichtung zum Zuführen des in der Einrichtung zum Sammeln des mit Wasserstoffperoxid versetzten Wassers zu dem Reaktor dazu zu veranlassen, das mit Wasserstoffperoxid versetzte Wasser dem Reaktor zuzuführen, wenn sie von der Füllstandsonde ein Signal erhält, das anzeigt, dass das mit Wasserstoffperoxid versetzte Wasser in der Einrichtung zum Sammeln des mit Wasserstoffperoxid versetzten Wassers einen vorbestimmten Füllstand erreicht hat.

11. Die Abfüllvorrichtung gemäß einem der Ansprüche 6 bis 10, die dazu ausgebildet ist, Flaschen oder Getränkekartons mit flüssigen Lebensmitteln, insbesondere Fruchtsäften oder Bier, zu befüllen.

12. Die Abfüllvorrichtung gemäß einem der Ansprüche 6 bis 11, in der die Einrichtung zum Sammeln des mit Wasserstoffperoxid versetzten Wassers ein Ölabscheider ist.
